# FASCICULE DE BREVET EUROPEEN

(11) **EP 3 472 641 B1**
(45) Date de publication et mention de la délivrance du brevet: **21.07.2021**
(21) Numéro de dépôt: 17730186.8
(22) Date de dépôt: 19.06.2017
(51) Int. Cl.: G01S 13/78, H01Q 3/26, H01Q 3/24

(54) **RADAR SECONDAIRE A GESTION SPATIO-TEMPORELLE OPTIMISEE**
SEKUNDÄRRADAR MIT OPTIMIERTEM RAUM-ZEIT-MANAGEMENT
SECONDARY RADAR WITH OPTIMIZED SPATIO-TEMPORAL MANAGEMENT

(30) Priorité: 21.06.2016 FR 1600982
(43) Date de publication de la demande: 24.04.2019
(73) Titulaire: Thales, 92400 Courbevoie (FR)
(72) Inventeur: BILLAUD, Philippe, 91470 Limours (FR)
(74) Mandataire: Marks & Clerk France
(86) Numéro de dépôt international: PCT/EP2017/064875
(87) Numéro de publication internationale: WO 2017/220461

(56) Documents cités:
- EP-A1- 0 497 652
- EP-A1- 2 259 085
- EP-A1- 2 911 240
- EP-A1- 2 930 531
- FR-A1- 2 680 581
- JP-A- 2011 176 512
- VAN WERKHOVEN G H C ET AL: "Evolutions in naval phased array radar at Thales Nederland B.V", ANTENNAS AND PROPAGATION (EUCAP), 2010 PROCEEDINGS OF THE FOURTH EUROPEAN CONFERENCE ON, IEEE, PISCATAWAY, NJ, USA, 12 avril 2010 (2010-04-12), pages 1-4, XP031705494, ISBN: 978-1-4244-6431-9
- ANGELILLI MASSIMO ET AL: "A family of Secondary Surveillance Radars based on Conformal Antenna array geometries", 2017 IEEE RADAR CONFERENCE (RADARCONF), IEEE, 8 mai 2017 (2017-05-08), pages 1681-1684, XP033104298, DOI: 10.1109/RADAR.2017.7944477 [extrait le 2017-06-07]

## Description

La présente invention concerne un radar secondaire à gestion spatio-temporelle optimisée, le radar étant équipé d'une antenne à balayage électronique à émission de type actif ou semi-actif.

Un radar secondaire à antenne à rotation mécanique doit notamment se confronter aux exigences simultanées suivantes :
- Assurer un taux de rafraichissement élevé de la position de la cible conduisant à diminuer la période de rotation ;
- Effectuer de nombreuses tâches avec les cibles coopérantes selon les différents protocoles (tâche de surveillance en mode SSR et Mode S ou identification IFF en Mode 4/5) à chaque tour d'antenne, ce qui conduit à une augmentation du temps d'éclairement sur chaque cible, donc à augmenter le temps d'éclairement requis par cible et ainsi à une augmentation de la période de rotation de l'antenne ce qui par suite conduit à une baisse du taux de rafraichissement de toutes les cibles à la fois en position et en données attendues

Ces deux exigences simultanées sont contradictoires. En pratique, la gestion dans l'espace et le temps du rayonnement d'une antenne secondaire (gestion spatio-temporelle) est un compromis donnant la préférence à une tâche, (surveillance ou identification notamment), selon la mission première du radar.

De façon conventionnelle, les antennes d'un radar secondaire sont mécaniquement solidaires de l'antenne primaire.

Le séquencement du radar se décompose en deux parties :
- Des périodes de surveillance SSR comportant des sous-périodes dites « All Call » (AC) où il faut au moins trois à cinq sous-périodes dans un même mode pour extraire les codes. Ces mêmes périodes servent également de périodes de recueil pour les nouveaux avions interrogés en mode S.
- Des périodes mode S comportant au moins trois à cinq sous-périodes dites « Roll Call » (RC) pour les transactions avec les cibles mode S.

Lors des périodes AC, le radar émet en début de période une interrogation SSR et une interrogation mode S d'appel général puis il attend pendant tout le reste de la période les réponses éventuelles des cibles SSR et des nouvelles cibles mode S à l'azimut de l'antenne. La période d'écoute correspond nécessairement à la distance instrumentée du radar en-deçà de laquelle une nouvelle cible peut apparaître.

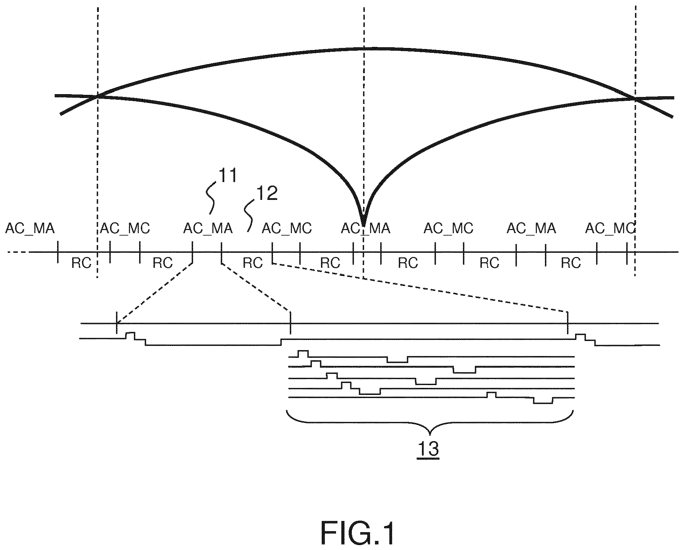

Lors des périodes RC, le radar émet des interrogations sélectives pour chacune des cibles mode S connues (déjà détectées et mises en piste) qui sont présentes dans le faisceau de l'antenne à cet azimut. Les cibles étant pré-localisées en azimut et distance par le pistage du radar, les interrogations sélectives sont positionnées pour que ne se chevauchent ni les interrogations, ni les réponses. Contrairement aux périodes d'écoute en AC, les périodes d'écoute en RC sont beaucoup plus courtes puisqu'elles sont limitées à la durée de la réponse Mode S attendue augmentée de l'incertitude sur la prédiction en distance de la cible (voir la figure 1).

En pratique, alors que la phase de veille que constitue la période AC est nécessaire, pour le recueil de nouvelles cibles et pour la surveillance des cibles SSR, selon la densité de cibles mode S dans le faisceau, les périodes RC, selon la densité de cibles mode S dans le faisceau à un azimut donné, peuvent être non utilisées ou au contraire insuffisantes en durée. La gestion spatio-temporelle du faisceau d'antenne n'est donc pas optimale.

Cette non-optimalité s'explique de façon très simple : jusqu'à présent, la fonction de radar dit secondaire a été envisagée comme un complément du radar dit primaire devant s'adapter *a posteriori* à l'aérien du radar primaire. Cette approche hiérarchisée et successive de type *top down* imposait le principe du balayage mécanique avec un diagramme unique focalisé: l'architecture s'en déduisait ainsi les limitations qui vont avec.

L'invention part du principe qu'une autre vision de conception est possible où le radar secondaire est d'abord conçu spécifiquement (approche *bottom up* sur la meilleure façon de réaliser les fonctions demandées) puis vient l'adaptation au radar primaire. Bien entendu, le radar dit primaire et le radar dit secondaire forment un système, à concevoir globalement et simultanément, ce qui va conduire, en final, à combiner les deux approches pour arriver à un compromis. Aussi la finalité de l'invention n'est-elle pas seulement d'améliorer la gestion spatio temporelle du radar secondaire, mais d'introduire une conception le plus possible autonome des fonctions appelées secondaires.

La recherche d'autonomie dans la conception des fonctions du radar dit secondaire va passer par la satisfaction de besoins fondamentaux d'indépendance vis-à-vis du sous-système constitué par le radar dit primaire. Ainsi, le premier élément d'indépendance va être de s'affranchir de l'asservissement à la rotation mécanique de l'antenne du sous-système constitué par le radar dit primaire. Il va ensuite être cherché des degrés de liberté supplémentaires qui vont être obtenus en séparant la fonction d'émission de la fonction de réception.

Ensuite, l'application de ces principes d'autonomie va conduire à différentes architectures physiques d'antennes associées à différents régimes d'émission et différents principes de formation de faisceaux à la réception.

Ces éléments d'approche système vont constituer le socle d'autonomie d'où, par voie de conséquence, une architecture système va pouvoir être bâtie qui va naturellement sublimer le compromis subi par la gestion spatio-temporelle dans le cas classique en affectant tout naturellement les différentes tâches, précédemment contradictoires, à des éléments multiples tant pour les interrogations que pour les réceptions.

Une fois les principes de conceptions établis et déroulés, il est alors possible d'envisager des réalisations d'application en classes physiques, telles que décrites dans le paragraphe ci-dessous.

Les antennes sont :
- Soit des antennes fixes à balayage électronique : elles peuvent être cylindriques ou constituées de plusieurs panneaux fixes (l'orientation du marché va vers un nombre de 4 à 6 panneaux fixes) ;
- Soit des antennes tournantes avec un panneau.

Au niveau hyperfréquence, les antennes à balayage électronique peuvent être classées selon 3 grands types :
- Soit à émission de type passif : l'émission et la réception sont centralisées en dehors de l'antenne elle-même (classiquement comme cela est le cas des antennes tournantes) ;
- Soit à émission de type semi-actif : l'émission est centralisée en dehors de l'antenne et la réception est répartie dans l'antenne elle-même ;
- Soit à émission de type actif : l'émission et la réception sont réparties dans l'antenne.

Une antenne à balayage électronique et à émission de type passif forme le faisceau et aiguille l'énergie en émission et réception dans une direction de l'espace depuis ou vers un interrogateur SSR / IFF. Une fois les tâches SSR ou IFF effectuées dans cette direction, le faisceau est commuté dans une autre direction. Par construction, une antenne à balayage électronique à émission de type passif reste mono faisceau. Par suite, elle ne peut émettre et recevoir à un instant donné que dans une seule direction.

De ce fait, les antennes à balayage électroniques à émission de type passif sont confrontées au même compromis que les antennes à rotation mécanique entre taux de rafraîchissement et le temps d'éclairement par cible.

Dans le cas d'une antenne à balayage électronique à émission de type actif, une fonction d'émission et de réception est associée à chaque élément rayonnant pour permettre d'émettre des interrogations SSR ou IFF simultanément par exemple dans deux directions différentes. Lorsque l'antenne de réception dispose d'une formation de faisceau par le calcul (FFC), il est alors possible de recevoir simultanément dans toutes les directions les réponses des cibles aux interrogations précédemment émises, par formation du faisceau de réception analogique (FFA) ou par le calcul (FFC).

Un document FR 2 680 581 A1 divulgue un système de radar de surveillance secondaire. Un document EP 2 930 531 A1 divulgue un radar secondaire de surveillance à grande cadence de rafraîchissement. Un document EP 2 911 240 A1 divulgue un système antennaire IFF.

On comprend donc que, pour s'affranchir du compromis complètement entre taux de rafraîchissement et temps d'éclairement par cible auquel sont confrontées les antennes à rotation mécanique et, d'une façon plus générale, les antennes à balayage électronique à diagrammes d'émission et de réception identiques, il est donc nécessaire de disposer d'une part d'émission répartie avec éléments rayonnants d'émission et d'autre part, d'éléments rayonnants de réception avec formation de faisceaux à la réception. Grâce à cette double condition, la gestion spatio-temporelle peut être libérée de la contrainte de pointage azimutal du faisceau et se focaliser alors sur la seule dimension temporelle.

Il devient alors envisageable d'améliorer la gestion spatio-temporelle (GST), en permettant notamment de distinguer :
- Les tâches de surveillance sur des cibles non gérables en distance, comme les cibles SSR ou IFF non adressables unitairement ou les nouvelles cibles Mode S ;
- Les tâches de surveillance Mode S et d'identification pré-localisées en distance et azimut.
Ces différentes tâches étant affectées à différents interrogateurs.

A cet effet, l'invention a pour objet un radar secondaire équipé d'une antenne à balayage électronique à régime d'émission actif ou semi-actif, couvrant l'espace en azimut sur 360°, caractérisé en ce que ledit radar :
- est mécaniquement et fonctionnellement indépendant du radar primaire ;
- applique les principes de séparation
   ∘ de diagramme d'émission pour chaque interrogation de tout mode ;
   ∘ de diagramme de réception pour chaque réponse de tout mode;
   ∘ d'affectation des tâches qui lui sont propres à des organes distincts ;
- comporte un ou plusieurs interrogateurs SSR / IFF dédié à la fois à la surveillance SSR ou IFF et au recueil de nouvelles cibles modes S ;
- comporte en outre un ou plusieurs autres interrogateurs SSR / IFF de surveillance sélective dédiés à la surveillance mode S et aux interrogations dirigées d'indentification IFF ;
- assure l'émission simultanée des interrogations desdits interrogateurs SSR / IFF dans des azimuts différents, ladite émission simultanée étant autorisée quand l'espacement azimutal des faisceaux formés en émission assure un niveau découplé de brouillage au niveau des transpondeurs des avions entre les interrogations émises par les lobes secondaires respectifs des faisceaux formés en émission ;
- assure la réception simultanée des réponses auxdits interrogateurs dans des azimuts différents, ladite réception simultanée étant autorisée quand l'espacement azimutal des faisceaux formés en réception assure un niveau découplé de brouillage au niveau du radar entre les réponses attendues par les lobes secondaires respectifs des faisceaux formés en réception ;
- commande aux interrogateurs d'assurer entre eux la séparation temporelle des périodes de réception quand l'espacement des faisceaux en azimut est insuffisant pour garantir soit la correcte interprétation de l'interrogation par le transpondeur soit la détection correcte de la réponse par le radar.

Dans un mode de réalisation particulier, l'un des interrogateurs dédiés à la fois à la surveillance SSR et au recueil de nouvelles cibles mode S, informe lesdits interrogateurs, dédiés à la surveillance mode S et aux interrogations dirigées, de la détection d'une nouvelle cible, ladite nouvelle cible étant alors gérée par lesdits interrogateurs, au moins un desdits interrogateurs commandant le pointage de son faisceau d'émission puis ultérieurement de son faisceau de réception dans la direction de la dite cible dès lors que l'autorisation d'émission et de réception simultanées mentionnée précédemment est acquise.

Un opérateur définit par exemple pour chaque cible le taux de rafraîchissement qu'il souhaite pour la surveillance/identification IFF quel que soit l'azimut de la cible détectée et de façon décorrélée de la veille.

Un opérateur définit par exemple le fonctionnement en multi modes comme suit :
- en veille, le fonctionnement étant non sélectif de type
   ∘ surveillance des avions des avions SSR
   ∘ surveillance des avions militaires en IFF
   ∘ acquisition de nouveaux avions Mode S
- en surveillance, le fonctionnement étant sélectif/désigné de type
   ∘ interrogations/réponses sélectives de Surveillance Mode S
   ∘ interrogations/réponses sélectives de Data Link Mode S avec les mêmes avions qu'en Surveillance Mode S
   ∘ interrogations dirigées d'identification IFF (modes 4/5) sur requête externe pour un avion pré-détecté
l'opérateur définissant aussi :
- pour chaque cible, indépendamment, le taux de rafraîchissement qu'il souhaite pour la surveillance en Mode S/data link Mode S/identification IFF quel que soit l'azimut de la cible détectée et de façon décorrélée de la veille ;
- les priorités relatives aux modes sélectionnés en cas de conflit sur la ressource de focalisation du faisceau en azimut en émission ou en réception.

Pour accélérer la surveillance SSR, ledit radar peut comporter au moins un autre interrogateur SSR / IFF de surveillance SSR, indépendant dudit premier interrogateur, ayant un faisceau associé pointant dans une autre direction que celle du faisceau associé audit premier interrogateur (à l'opposé pour un autre interrogateur SSR / IFF, en quadrature pour trois autres interrogateurs SSR / IFF).

Quand le régime d'émission est de type actif, un dispositif superviseur est par exemple prévu pour autoriser des interrogations simultanées dans des azimuts suffisamment distincts, compte-tenu du faisceau formé, pour éviter le blocage des transpondeurs et en ce que, quand le régime d'émission est de type semi-actif, la ressource commune d'émission peut être allouée en priorité à l'interrogateur SSR / IFF n° 1, puis aux autres interrogateurs.

Ladite antenne est par exemple cylindrique.
Ladite antenne est par exemple constituée par des panneaux à chacun desquels est associé au moins un interrogateur SSR / IFF.
Elle peut être fixe ou tournante.

D'autres caractéristiques et avantages de l'invention apparaîtront à l'aide de la description qui suit faite en regard de dessins annexés qui représentent :
- La figure 1, des séquences de surveillance SSR et d'interrogations sélectives dans un radar à rotation mécanique ;
- La figure 2, par une vue en perspective un exemple d'antenne secondaire cylindrique à balayage électronique ;
- La figure 3, une illustration du fonctionnement d'une antenne cylindrique à balayage électronique passive ;
- La figure 4, une représentation de gains d'antennes pour trois directions de pointage successives ;
- La figure 5, une illustration du fonctionnement d'une antenne cylindrique à balayage électronique active ;
- La figure 6, une illustration du principe de gestion spatio-temporelle des faisceaux d'antenne dans un radar à antenne électronique semi-active selon l'invention ;
- La figure 7, des séquences de surveillance SSR et d'interrogations sélectives dans un radar selon l'invention comportant deux interrogateurs SSR / IFF ;
- La figure 8, une illustration de l'exploitation des faisceaux d'antennes dans un radar selon l'invention comportant trois interrogateurs SSR / IFF;
- La figure 9, des séquences de surveillance SSR et d'interrogations sélectives dans un radar selon l'invention comportant trois interrogateurs SSR / IFF ;
- La figure 10, un exemple d'implantation de la gestion spatio-temporelle dans un radar à antenne électronique à émission semi-active selon l'invention.
- La figure 11, un exemple d'implantation de la gestion spatio-temporelle dans un radar à antenne électronique à émission active à 4 panneaux fixes ;
- La figure 12, un exemple d'implantation de la gestion spatio-temporelle dans un radar à antenne électronique à émission active à 1 panneau rotatif ;

Bien que les figures prennent comme exemple l'antenne à balayage électronique à émission semi-active, les principes de l'invention sont encore plus applicables à l'antenne à balayage électronique à émission active puisqu'elle permet en plus les émissions simultanées,

La figure 1 présente le séquencement classique d'un interrogateur SSR / IFF associé à rotation mécanique. Par la suite, on évoquera des interrogateurs SSR / IFF, ceux-ci pouvant être indifféremment du type SSR et/ou IFF.
La GST fait se succéder temporellement des périodes AC 11 et RC 12 à l'azimut auquel pointe l'antenne. La GST interroge sélectivement 13 dans la période RC les cibles mode S qu'elle pense présentes à cet azimut dans le faisceau de l'antenne.
De ce fait, quand, dans son avancement progressif en azimut, le faisceau n'éclaire plus la cible Mode S celle-ci devra attendre un tour d'antenne pour poursuivre les transactions en Mode S.

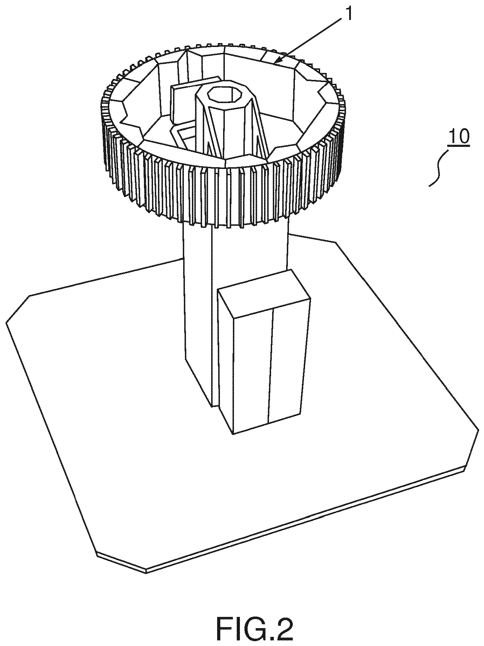

La figure 2 présente par une vue en perspective un exemple d'antenne secondaire cylindrique à balayage électronique 1 équipant un radar 10. L'invention pourrait s'appliquer également sur une antenne électronique composée de panneaux plans, par exemple au nombre de quatre, couvrant l'espace en azimut sur 360°.

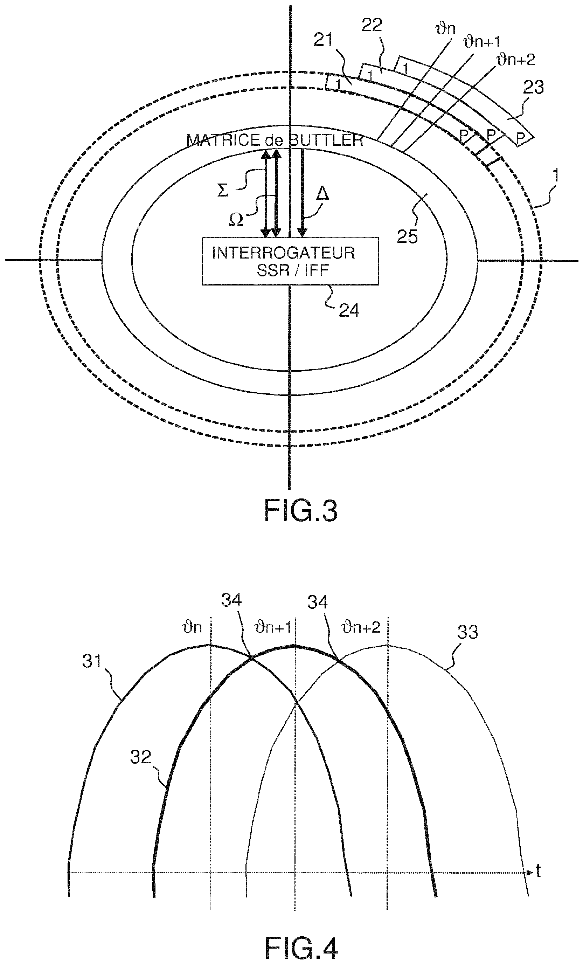

La figure 3 illustre le fonctionnement d'une antenne électronique à émission de type passif. Dans ce cas, un amplificateur de puissance unique centralisé élabore l'interrogation. Une matrice de commutation 25, par exemple une matrice de Butler, centralisée, permet de commander la position de la puissance d'émission sur le pourtour de l'antenne au moyen d'une loi de phase appliquée à l'entrée de la matrice. La commande en réception est également centralisée via la matrice de Butler. Cette dernière est interfacée avec un interrogateur SSR / IFF 24 produisant les interrogations SSR et Mode S et décodant les réponses en retour.
Le fonctionnement élémentaire d'une antenne fixe cylindrique à balayage électronique à émission de type passif consiste à simuler une rotation d'antenne mécanique pour répartir de manière homogène le temps d'éclairement sur l'ensemble de la couverture.
A un instant donné, l'antenne cylindrique utilise P éléments rayonnants 21 pour former le faisceau dans un azimut donné θₙ. Une fois les tâches de surveillance SSR ou Mode S effectuées, le pointeur d'antenne est décalé de N éléments rayonnants et on reforme le faisceau d'antenne dans un autre azimut θₙ₊₁ à partir d'un autre ensemble 22 de P éléments décalé par rapport au premier ensemble 21. Et ainsi de suite avec un autre ensemble 23 de P éléments pour former un faisceau dans une autre direction θₙ₊₂.

La figure 4 présente les gains d'antenne 31, 32, 33 en fonction du temps pour trois positions d'azimut successives θₙ, θₙ₊₁, θₙ₊₂. Ainsi, dans chaque position de faisceau, la GST exécute un séquencement du type de celui de la figure 1. Deux types de gestion de faisceau sont possibles :
- soit le faisceau avance à vitesse azimutale constante, comme pour une antenne à rotation mécanique, garantissant donc une vitesse de rafraichissement identique dans tous les azimuts mais ne garantissant pas l'exécution de toutes les transactions mode S faute de temps ;
- soit le faisceau est maintenu à un azimut donné le temps nécessaire pour positionner le nombre de périodes AC et RC requises pour assurer la surveillance SSR et Mode S ou pour une identification IFF Mode 4 ou Mode 5 mais alors la cadence de rafraichissement n'est plus constante et elle dépend complètement du nombre d'avions et des transactions qui leurs sont associées.

Le séquencement de l'antenne électronique à émission de type passif est ainsi le même que celui d'une antenne mécanique. En effet, la commutation du faisceau d'antenne d'une position azimutale à une autre nécessite la commutation d'éléments de puissance. A chaque commutation la transmission RF est interrompue. Il est donc plus efficace de faire toutes les transactions RF à un azimut donné avant de changer le positionnement du faisceau.

Avec une telle antenne, le radar reste un compromis entre :
- La vitesse simulée de rotation d'antenne (cadence de rafraîchissement) ;
- La portée du radar, garantie par le gain d'antenne au niveau des recoupes de gain 34 (vitesse de déplacement du faisceau en azimut) ;
- Le nombre d'avions maximum par secteur gérables en mode S ;
- Le nombre de transaction mode S par avions.

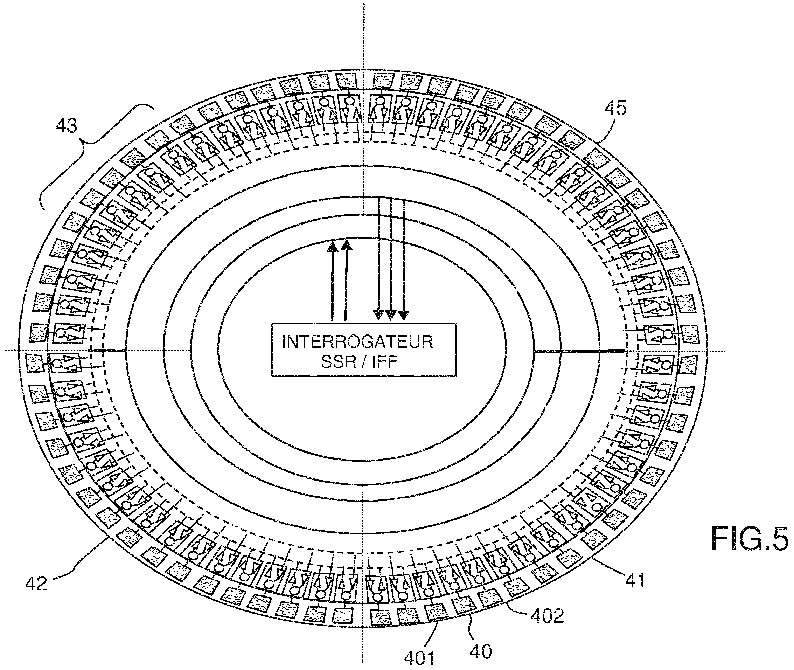

La figure 5 illustre le principe d'une antenne à balayage électronique à émission de type actif dans le cas d'une antenne cylindrique qui associe à chaque élément rayonnant 40 :
- Une fonction émission 401 réglable en niveau de puissance, pour réduire le niveau des lobes secondaires et adapter la puissance rayonnée à la distance de la cible visée, et en phase, pour assurer le dépointage du faisceau ;
- Une fonction de réception 402.
Ce type d'antenne à émission de type actif permet donc simultanément à différents azimuts de :
- En émission 44, transmettre des interrogations via un bus de transmission 41, dans des directions suffisamment différentes, pour que la première interrogation ne soit pas perçue par la cible à laquelle elle n'est pas destinée afin d'éviter son blocage, c'est-à-dire assez espacées en azimut en fonction des lobes secondaires du faisceau ainsi formé en utilisant P éléments rayonnants 43, le faisceau d'émission étant formé par formation de faisceau par le calcul 44 (FFC) ;
- En réception 45, recevoir des réponses, via un bus de réception 42, simultanément sur plusieurs autres azimuts, suite à des interrogations transmises antérieurement, en exploitant par formation de faisceau l'ensemble des éléments rayonnants de l'antenne fixe cylindrique.

Une antenne à balayage électronique à émission de type actif permet donc d'exploiter complètement les caractéristiques du mode S dans le sens où la sélectivité des interrogations comme des réponses permet de sélectionner une cible parmi plusieurs à un azimut donné.

Un autre type d'antenne à balayage électronique est l'antenne à émission de type semi-actif, qui représente une version simplifiée d'une antenne à émission de type actif. En particulier :
- Elle comporte une fonction d'émission centralisée effectuant une formation du faisceau et la commutation vers P éléments rayonnants ;
- Une fonction réception est associée à chaque élément rayonnant.
Une antenne à balayage électronique à émission de type semi-actif permet donc simultanément de :
- Transmettre une seule interrogation dans une direction azimutale unique;
- Recevoir plusieurs réponses, via le bus de réception 42, simultanément sur plusieurs autres azimuts, suite à des interrogations transmises antérieurement en exploitant aux mêmes instants par formation de différents faisceaux l'ensemble des éléments rayonnants 40 de l'antenne.

Comme l'antenne à émission de type passif, l'antenne à émission de type semi-actif ne permet l'émission que dans un seul azimut donné et la commutation de l'émission d'un azimut vers un autre est assez lente car nécessitant la commutation de signaux forts.
Néanmoins, tant pour l'antenne à émission de type actif que pour l'antenne à émission de type semi-actif, la séparation des faisceaux émission et réception offre déjà la possibilité d'une amélioration notable de la gestion spatio-temporelle de la fonction IFF.

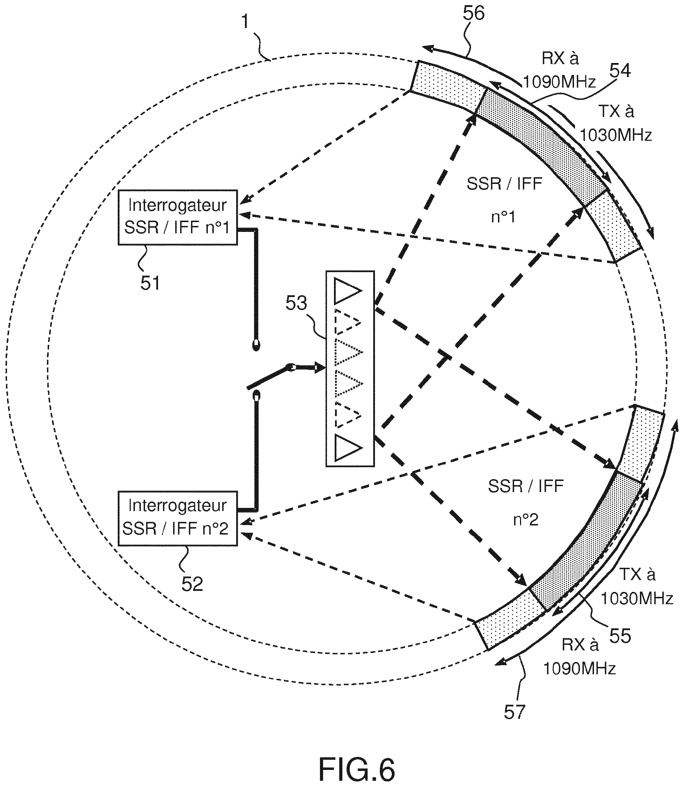

La figure 6 illustre le principe de l'invention qui propose une nouvelle gestion spatio-temporelle (GST), différente de celle des antennes à rotation mécanique ou à balayage électronique avec émission de type non actif, dans le sens où elle distingue :
- Les tâches de surveillance sur des cibles non gérables en distance (surveillance SSR et IFF, cibles non adressables sélectivement comme les cibles mode S, ou nouvelles cibles mode S) ;
- Des tâches de surveillance (mode S) et identification IFF (désignation sur piste primaire) pré-localisées en distance et en azimut.
La figure 6 présente un exemple de réalisation, dans le cas d'une antenne électronique à émission de type semi-actif, basée sur deux interrogateurs SSR / IFF 51, 52 de moyenne puissance, reliés à un dispositif 53 à amplificateur de puissance associé à une formation du faisceau et son aiguillage vers les P éléments rayonnants 54, 55, le dispositif 53 commutant sur l'un ou l'autre des interrogateurs SSR / IFF. Dans cette configuration :
- Le premier interrogateur (interrogateur SSR / IFF n°1), est dédié à la surveillance SSR, IFF et au recueil des nouvelles cibles mode S ;
- Le deuxième interrogateur (interrogateur SSR / IFF n° 2), peut être basculé d'une surveillance opposée à l'IFF n° 1 (en tache de fond en absence des taches suivantes) vers :
   - Soit des identifications IFF selon une fenêtre fonction de la position de la cible définie par le radar primaire ;
   - Soit des transactions sélectives mode S.

La réception étant permanente sur 360°, la FFC permet de former des faisceaux dans des directions azimutales différentes 56, 57 simultanément et ainsi permettre une écoute simultanée dans plusieurs azimuts des réponses de tout mode.
Dans l'exemple de la figure 6, l'IFF n° 1 assure la surveillance SSR à azimut donné, alors que l'IFF n° 2 assure simultanément une surveillance mode S à un autre azimut.

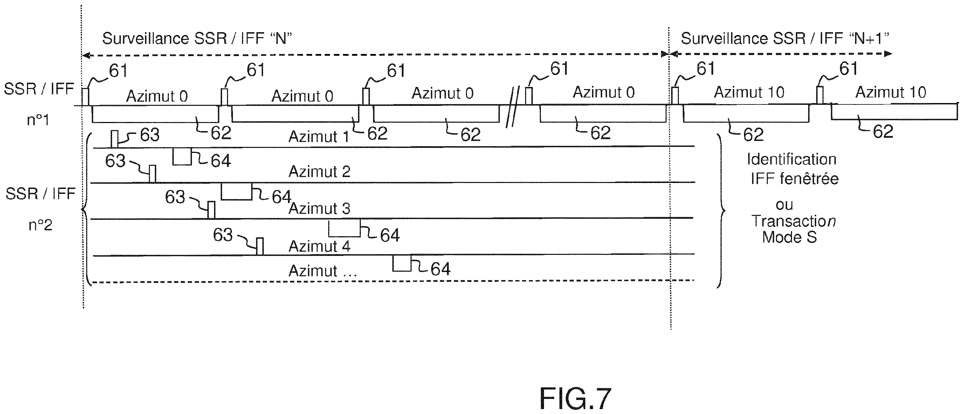

La figure 7 illustre un exemple de GST assurant une succession des séquences de surveillance avec le procédé selon l'invention, plus particulièrement la surveillance SSR n° N suivie de la surveillance SSR n° N+1. Cet exemple correspond au cas de la figure 6 basé sur l'utilisation de deux interrogateurs SSR / IFF. La figure 7 présente la séquence des périodes d'interrogations 61, 63 et des périodes dédiées aux réponses 62, 64 dans des azimuts donnés où ceux-ci sont repérés par un numéro d'ordre 1, 2, 3, 4 correspondants à l'azimut prédit des cibles référencées.
Dans la surveillance SSR n° N :
- L'interrogateur SSR / IFF n° 1 assure, à l'azimut 0, la surveillance azimutale dans les modes classiques, SSR, IFF et au recueil des nouvelles cibles mode S notamment ;
- L'interrogateur SSR / IFF n° 2 peut :
   - soit assurer, dans les autres azimuts 1, 2, 3, 4 ..., la gestion des pistes référencées en azimut distance, en identification IFF ou en surveillance mode S, quasiment sans latence ;
   - soit en l'absence de celles-ci, assurer, dans l'azimut opposé à l'azimut 0 (+180°), une surveillance azimutale opposée de l'IFF n° 1 pour les modes classiques, SSR, IFF et acquérir ainsi plus rapidement de nouvelles cibles.

Pour l'IFF n° 1, étant donné que les cibles sont inconnues, les périodes d'écoute 62, dédiées aux réponses, sont longues en étant par ailleurs fonction de la distance instrumentée. La durée d'une surveillance à un azimut donné dépend du nombre de modes SSR à interroger et à décoder. Tous les azimuts doivent être couverts les uns après les autres. Après la surveillance SSR n° N, l'interrogateur SSR / IFF n° 1 pointe à l'azimut suivant, l'azimut 10 dans l'exemple de la figure 6, de manière analogue au séquencement décrit en figure 4.
Le choix d'un seul second interrogateur, IFF n° 2, pour gérer les transactions à différents azimuts nécessite néanmoins d'assurer le non chevauchement des réponses 64, pour permettre le décodage avec succès de la réponse comme le montre les séquences de la figure 7.

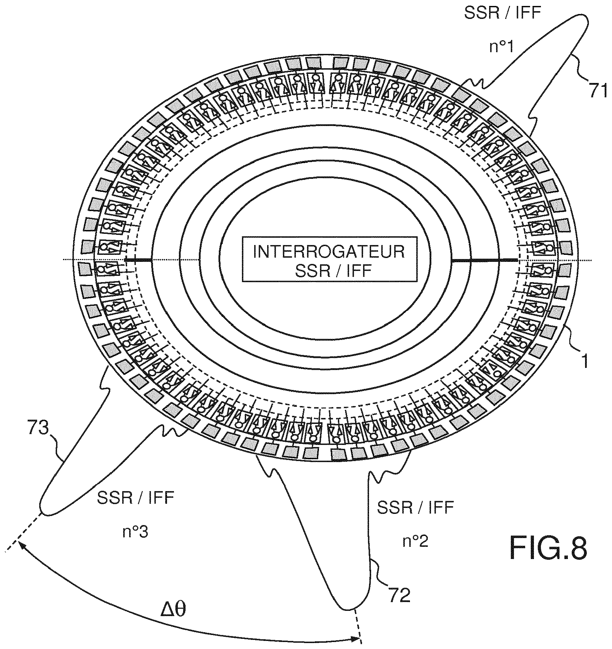

La figure 8 présente une mise en œuvre de l'invention plus élaborée où un troisième interrogateur SSR / IFF, IFF n° 3, est ajouté. Cette figure présente au même instant les trois faisceaux d'antennes 71, 72, 73 sur le pourtour de l'antenne, correspondant aux trois interrogateurs SSR / IFF n° 1, IFF n° 2 et IFF n° 3.
Cette configuration permet notamment de chevaucher temporellement des interrogations ou réponses à des azimuts, différents pour assurer la séparation en azimut, selon le faisceau d'antenne formé avec les P éléments, et donc d'assurer le décodage avec succès soit le décodage des deux interrogations simultanées par les transpondeurs soit le décodage des deux réponses simultanées respectivement par IFF n° 2 et IFF n° 3. Ceci est applicable même dans le cas d'une antenne à balayage électronique à émission de type semi-actif, un seul faisceau d'émission peut être créé à un instant donné alors que plusieurs faisceaux de réception simultanés sont possibles.

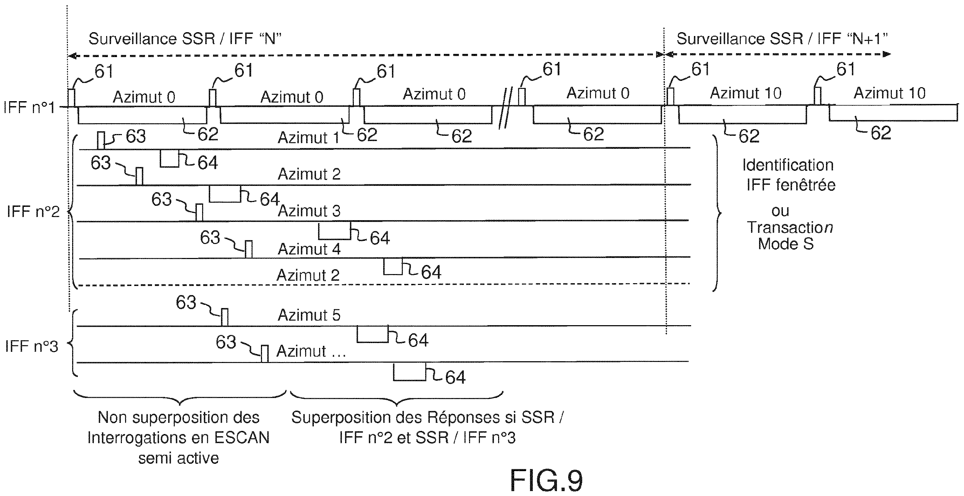

La figure 9 présente les successions de périodes d'interrogations et d'écoutes correspondant à une configuration à trois interrogateurs SSR / IFF, comme illustré par la figure 8. Dans cette représentation, les notations par numéros d'ordre, azimut 0 ou 10 et azimut 1, 2, 3 ..., signifient que ces azimuts sont suffisamment espacés, avec des lobes principaux distincts, pour permettre la réception simultanée de signaux de différentes cibles sans provoquer de chevauchements des réponses, qui entraîneraient des non détections par garbling. Plus précisément, en référence à la figure 8, un angle Δθ entre deux faisceaux 72, 73 doit rester au-delà d'une valeur minimum pour éviter les chevauchements. Classiquement, une détection est obtenue lorsque le rapport signal sur brouilleur est supérieur à 10dB. De ce fait, la GST définit l'angle Δθ en calculant le niveau de brouillage reçu par un lobe secondaire du faisceau adjacent et la cible visée par ce faisceau. De même, en référence à la figure 4, l'écart maximum entre deux faisceaux de veille, azimut 0 et azimut 10 dans l'exemple de la figure 9, est défini par le gain minimum attendu correspondant au recoupement 34 de leurs diagrammes de rayonnement. Le pas de faisceau de veille entre azimuts dépend donc du faisceau et de la portée souhaitée. On peut ainsi discrétiser l'espace azimutal et pointer une suite d'azimuts pour couvrir tout l'espace, en veille et simultanément en transactions dirigées quasiment indépendamment en interrogations et en réponses.
On décorrèle ainsi la veille toujours garantie à vitesse azimutale constante de la surveillance Mode S/identification IFF désignée celles-ci étant désormais effectuées sur une base temporelle uniquement, à la fois indépendamment par avion et décorrélée de la veille.
La veille permet de localiser les cibles, par l'interrogateur SSR / IFF n° 1. Une cible étant localisée, les transactions peuvent alors se faire par les deux autres interrogateurs, et plus généralement sur les autres interrogateurs dans une configuration comportant plus de trois interrogateurs.
L'invention permet ainsi de gérer dans le temps et dans l'espace le déplacement des faisceaux 71, 72, 73 et le déclenchement des interrogations et des réponses et ainsi d'optimiser les différentes tâches en fonction du temps disponible, en jouant sur l'agilité des faisceaux offerte par une antenne électronique à émission de type actif ou semi-actif.
Pour ce faire, un gestionnaire des diagrammes d'antenne comporte une interface gérée en temps permettant de définir l'heure de début, l'heure de fin du faisceau dans un azimut donné pour chaque interrogateur.
Les interrogations 61, 63 émises par le faisceau d'émission ne peuvent pas être superposées dans le cas d'une émission de type semi-actif. En revanche, les réponses 62, 64 peuvent être superposées dans le temps en raison du fait que plusieurs faisceaux de réception peuvent être produits simultanément. On peut ainsi réaliser plusieurs réceptions SSR / IFF en parallèle avec une seule antenne ce qui simplifie les contraintes de la GST. En effet, avant, il fallait garantir un total non chevauchement des réponses puisque celles-ci étaient dans le même azimut.

En application du procédé selon l'invention, un radar SSR / IFF dans une version à antenne électronique à émission de type semi-actif ou actif peut donc atteindre une gestion spatio-temporelle optimale, en particulier :
- le taux de rafraîchissement de la surveillance SSR ou IFF peut être à son optimum, en considérant qu'elle est effectuée par un seul interrogateur, l'interrogateur SSR / IFF n° 1, en raison du fait que cette tâche 61, 62 est prioritaire et est désormais décorrélée de la surveillance mode S ou des interrogations dirigées (DI) d'identification IFF, son accélération pouvant être envisagée en ajoutant un autre interrogateur dédié à la surveillance SSR ou IFF, noté IFF n° 1bis, gérant un azimut opposé à interrogateur SSR / IFF n°1 ;
- le taux de rafraîchissement de la surveillance mode S, incluant le data link mode S associé, ou des interrogations dirigées (DI) d'identification IFF peut aussi être à son optimum puisqu'elle est possible dans toutes les directions, en évitant celles en cours de la surveillance SSR / IFF pour limiter la pollution, selon les besoins fonctionnels.

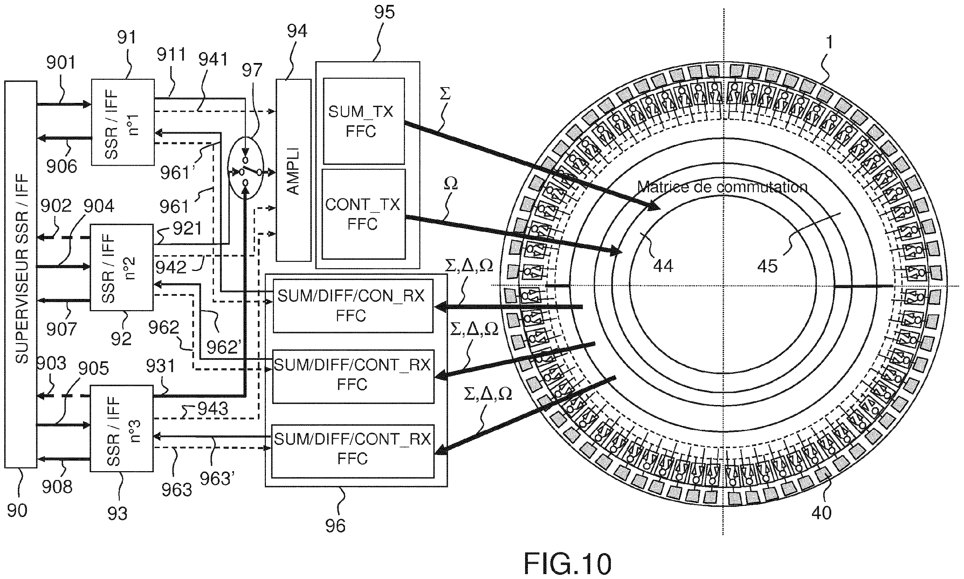

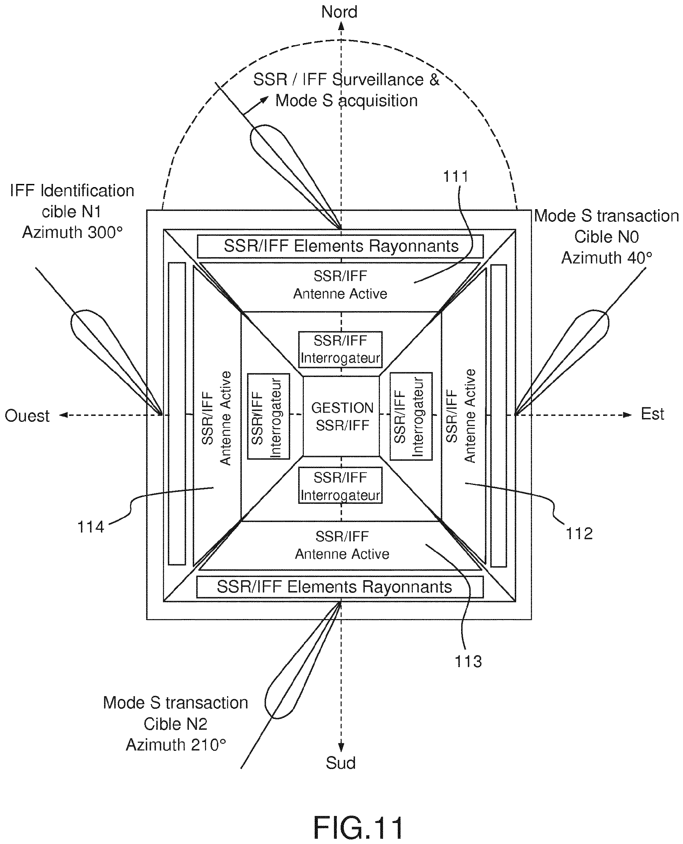

La figure 10 illustre une implémentation possible de gestion spatio-temporelle dans un radar selon l'invention, équipé d'une antenne à balayage électronique à émission de type actif ou semi-actif. Dans cet exemple, on utilise trois interrogateurs SSR / IFF 91, 92, 93. Il est bien sûr possible de prévoir des réalisations avec un nombre supérieur d'interrogateurs (de 2 à N). Un premier interrogateur 91, interrogateur SSR / IFF n°1 est affecté à la surveillance SSR ou IFF, les autres interrogateurs 92, 93, interrogateurs SSR / IFF n° 2 et interrogateur SSR / IFF n° 3, sont principalement affectés aux tâches de transaction (surveillance mode S, incluant le data link mode S associé, et DI pour identification IFF).
Cet exemple est également présenté avec une antenne électronique cylindrique 1 à émission de type semi-actif. L'antenne est cylindrique, mais d'autres types de configurations sont possibles pourvu que l'antenne couvre 360°. L'antenne peut aussi être constituée de plusieurs panneaux d'éléments rayonnants, quatre par exemple comme le présente la figure 11. Un superviseur 90 assure la coordination des interrogateurs SSR / IFF. En particulier, il définit 901 les tâches IFF de surveillance de l'interrogateur n° 1 permettant à un opérateur de définir selon l'azimut la nature des tâches de surveillance à faire. Il définit ainsi les modes IFF, l'identification IFF de veille dans un secteur azimutal donné, la puissance et la sensibilité de veille notamment.
En fonction des disponibilités 902 ,903 des interrogateurs SSR / IFF n° 2 et n° 3, le superviseur distribue 904, 905 :
- les interrogations sélectives mode S avec les transactions mode S associées à chaque cible, soit périodiquement, soit à la suite de demandes externes ;
- les interrogations dirigées pour l'identification IFF selon requêtes externes au radar IFF;
   ces interrogations étant à effectuer selon le taux de rafraîchissement des cibles souhaité par l'opérateur pour chacune des cibles détectées.

Désormais, le service rendu par le radar IFF est opéré sur une base temporelle que l'opérateur définit pour chaque cible selon le niveau d'intérêt qu'il lui porte.

De même, une nouvelle cible mode S détectée en surveillance 906 est désormais très rapidement confirmée par une interrogation sélective (et non plus 2 tours plus tard comme avec l'antenne mécanique), délivrant ainsi à l'opérateur dès sa détection toutes les informations mode S requises 907, 908 en tant que cibles mode S, notamment l'identification d'un vol ou encore la capacité des liaisons de transmission de données. De plus, ceci est réalisé avec un taux de succès du placement des interrogations bien plus élevé qu'avec une antenne mécanique tournante, puisqu'enlevant l'aléa de déplacement de la cible lors des au minimum 2 tours entre la 1^{ère} détection et la 1^{ère} interrogation sélective d'une antenne mécanique

Chacun des interrogateurs SSR / IFF 91, 92, 93 requiert l'accès à une ressource d'émission en précisant l'azimut d'émission 941, 942, 943 et en fournissant les signaux somme et de contrôle 911, 921, 931 à émettre. A cet effet, l'antenne 1 étant à émission de type semi-actif, un amplificateur centralisé 94 fournit la puissance nécessaire à l'émission. Les signaux somme et contrôle bas niveau sont transmis à l'amplificateur via un commutateur 97, aiguillant l'un ou l'autre des interrogateurs vers l'amplificateur. Les signaux sont amplifiés et les faisceaux somme Σ et contrôle Ω sont calculé (FFC) par des moyens de formation de faisceau 95. A un instant donné les signaux amplifiés et calculés par les moyens de formation de faisceau 95 sont transmis, via une matrice de commutation 44, aux groupes de Q éléments rayonnants, pour former un faisceau pointant dans l'azimut requis 941, 942, 943.
En réception, les faisceaux affectés respectivement à l'interrogateur n°1, à l'interrogateur n° 2 et à l'interrogateur n° 3 peuvent être formés en parallèle. Chaque interrogateur requiert donc indépendamment la formation en parallèle d'un faisceau réception, à partir de P éléments rayonnants, pour les signaux somme Σ, les signaux différence Δ et les signaux de contrôle Ω dans son azimut requis 961, 962, 963. Les faisceaux de réception sont formés par le calcul (FFC) par des moyens de réception et de traitement 96. Une FFC, calculant les faisceaux Σ, Δ, Ω est affectée à chaque interrogateur. Les signaux 961', 962', 963' issus des FFC sont transmis vers leurs interrogateurs respectifs.
Les séquences de veille et d'interrogations produites par le système de la figure 10 sont par exemple les séquences illustrées par la figure 9. En particulier, le radar selon l'invention :
- assure l'émission (61, 63) simultanée des interrogations des interrogateurs (91, 92, 93) dans des azimuts différents (71,72,73), l'émission simultanée étant autorisée quand l'espacement azimutal des faisceaux formés en émission assure un niveau découplé de brouillage, classiquement d'au moins 10 dB, au niveau des transpondeurs entre les interrogations reçues par les lobes secondaires respectifs de trois faisceaux formés en émission.
- assure la réception (62, 64) simultanée des réponses auxdits interrogateurs (91, 92, 93) dans des azimuts différents (71, 72, 73), la réception simultanée étant autorisée quand l'espacement azimutal des faisceaux formés en réception assure un niveau découplé classiquement d'au moins 10 dB de brouillage au niveau du radar entre les réponses attendues par les lobes secondaires respectifs des trois faisceaux formés en réception ;

Avantageusement, l'invention permet d'utiliser simultanément plusieurs parties de l'antenne et donc d'assurer une plus grande surveillance à un instant donné avec plusieurs cibles à des azimuts différents simultanément, et non l'une après l'autre comme dans certaines solutions de l'art antérieur.

La figure 11 montre l'application de ce principe de gestion spatio-temporelle au cas d'une antenne fixe non cylindrique, il s'agit ici d'une antenne à panneaux fixes équipée dans ce synoptique d'un seul interrogateur SSR / IFF par panneau. Dans cet exemple, alors que le panneau supérieur assure une surveillance SSR et un recueil de nouvelles cibles modes S, les panneaux latéraux et inférieur assurent simultanément 2 transactions mode S et une identification IFF dirigée à d'autres azimuts.

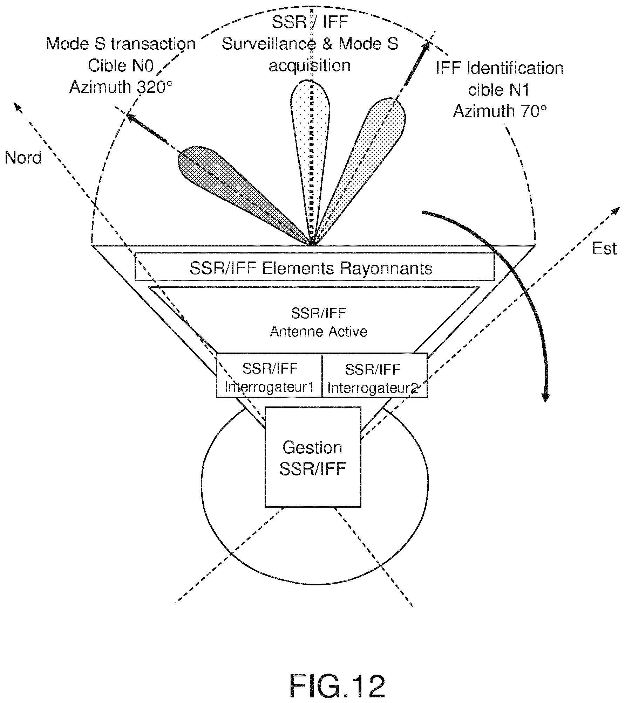

La figure 12 montre l'application de ce principe de gestion spatio-temporelle au cas d'une antenne tournante plane constituée d'un seul panneau. Dans cet exemple, l'interrogateur SSR / IFF n°1 assure une surveillance SSR et un recueil de nouvelles cibles modes S, alors que l'interrogateur SSR / IFF n°2 assure successivement une transaction mode S et une identification dirigée à 2 autres azimuts que la veille effectuée par l'interrogateur SSR / IFF n°1.
A nouveau, cette configuration d'antenne bien que plus légère que celle en figure 11, donc certes moins performante, permet néanmoins de limiter la contrainte apportée par la rotation de l'antenne à la fois en décorrélant :
- la surveillance SSR et au recueil de nouvelles cibles modes S, alloué au processeur n°1 et au faisceau orthogonal au plan de l'antenne,
- de la gestion des transactions mode S et identification dirigée allouée au processeur n°2 et aux faisceaux défléchis
   offrant ainsi une indépendance azimutale sur la largeur de la zone de déflexion du faisceau.

Le principe de gestion spatio-temporelle des interrogations SSR / IFF dans un radar selon l'invention, illustrée notamment par la figure 10, peut être décrit notamment, en totalité ou en partie, par les caractéristiques ci-dessous, utilisant avantageusement le fait qu'au moins l'émission des interrogations comme la réception des réponses peuvent être simultanées pour les différents interrogateurs dans des azimuts indépendants :
- un premier interrogateur SSR / IFF 91, par exemple l'IFF n° 1, est dédié à la fois à la surveillance SSR ou IFF et au recueil de nouvelles cibles modes S ;
- un ou plusieurs interrogateurs SSR / IFF 92, 93, par exemple les interrogateurs SSR / IFF n° 2 et n° 3, sont dédiés à la surveillance mode S et aux interrogations dirigées (DI) d'identification IFF, issues des pistes du radar primaire ou secondaire ou tout autre moyen de localisation, chaque interrogateur effectuant le décodage de ses réponses modes S ou DI en assurant le placement dans le temps des interrogations sélectives ou DI pour éviter le chevauchement de ses réponses ;
- l'émission des 3 interrogateurs peuvent être autorisées en simultané quand l'espacement azimutal des faisceaux générés en réception assure un niveau faible (>10dB, par exemple) de brouillage entre les interrogations transmises aux transpondeurs reçues par les lobes secondaires respectifs des 3 faisceaux ;
- les réceptions des 3 interrogateurs peuvent être autorisées en simultané quand l'espacement azimutal des faisceaux générés en réception assure un niveau faible (>10dB, par exemple) de brouillage entre les réponses attendues du radar par les lobes secondaires respectifs des 3 faisceaux ;
- l'interrogateur SSR / IFF n° 1 de recueil de nouvelles cibles mode S informe les autres interrogateurs de surveillance sélective 92, 93, IFF n° 2 et n° 3, lors de la détection d'une nouvelle cible qui est alors gérée par l'un d'eux, en particulier au moins un interrogateur 92, 93 commande le pointage de son faisceau de réception dans la direction de la cible détectée. Cette réactivité permet la connaissance précise de la position de la cible en enlevant l'incertitude d'évolution de la cible sur 2 tours comme en antenne mécanique tournante. A titre d'exemple, en se référant à la figure 8, une cible étant détectée dans le faisceau d'émission 71 de l'interrogateur n° 1, le faisceau de réception 72 de l'interrogateur n° 2 est alors commuté dans la direction, lors de la réponse, du faisceau d'émission 71 ceci dès que le niveau des lobes secondaires de la nouvelle position du faisceau 71 le permet, on pourrait de même commuter le faisceau de réception 73 de l'interrogateur n° 3 dans la direction du faisceau d'émission 71, cela dépendant de la charge respective de travail des interrogateurs 72 et 73 ;
- la surveillance SSR peut être accélérée, c'est-à-dire le taux de rafraichissement augmenté, en allouant d'autres interrogateurs SSR / IFF n° 1 dédiés à la surveillance SSR ou IFF ayant des faisceaux indépendants, en cas d'utilisation de deux interrogateurs les faisceaux pouvant être opposés (+ 180°) alors qu'avec quatre interrogateurs les faisceaux peuvent être en quadrature (+90°) conduisant à une cadence de la surveillance SSR respectivement deux à quatre fois plus rapide qu'avec un seul interrogateur ;
- dans le cas où le régime d'émission de l'antenne 1 est de type semi-actif, la ressource commune d'émission 94 peut être allouée en priorité à l'interrogateur SSR / IFF n° 1, puis aux autres interrogateurs, interrogateur SSR / IFF n° 2 et interrogateur SSR / IFF n° 3 dans l'exemple de la figure 10, donnant ainsi la priorité à la surveillance SSR puisque celle-ci émet peu souvent ;
- dans le cas où le régime d'émission de l'antenne 1 est de type actif, un dispositif superviseur peut être prévu pour autoriser des interrogations simultanées dans des azimuts suffisamment distincts, compte-tenu du faisceau formé, pour éviter le blocage des transpondeurs, ce en assurant un niveau plus faible (>10dB, par exemple) de résiduel d'interrogations par les lobes secondaires.

A côté des avantages apportés par une antenne secondaire à balayage électronique (suppression notamment des moteurs et des joints tournants), l'invention permet avantageusement une indépendance de la phase « surveillance SSR ou IFF et recueil de nouvelles cibles mode S » et de la phase « surveillance sélective mode S ou identification IFF dirigée ». Elle permet également avantageusement la suppression des surcharges sectorielles puisque les transactions sélectives (surveillance mode S ou DI) peuvent être maintenues le temps nécessaire à l'azimut souhaité sans pénaliser les autres tâches. Un gain fonctionnel important est donc obtenu en supprimant quasiment tous les problèmes de limite de charge sectorielle. Désormais, le service rendu par le radar IFF est opéré sur une base temporelle que l'opérateur définit pour chaque cible selon le niveau d'intérêt qu'il lui porte quasiment sans contrainte azimutale.

## Revendications

1. Radar secondaire équipé d'une antenne à balayage électronique (1) à régime d'émission actif ou semi-actif, couvrant l'espace en azimut sur 360°, **caractérisé en ce que** ledit radar :
- est mécaniquement et fonctionnellement indépendant du radar primaire ;
- applique les principes de séparation
o de diagramme d'émission pour chaque interrogation de tout mode ;
∘ de diagramme de réception pour chaque réponse de tout mode;
∘ d'affectation des tâches qui lui sont propres à des organes distincts ;
- comporte un ou plusieurs interrogateurs SSR / IFF (91) dédiés à la fois à la surveillance SSR ou IFF et au recueil de nouvelles cibles modes S ;
- comporte en outre un ou plusieurs autres interrogateurs SSR / IFF de surveillance sélective (92, 93) dédiés à la surveillance mode S et aux interrogations dirigées d'identification IFF ;
- assure l'émission (61, 63) simultanée des interrogations desdits interrogateurs SSR / IFF (91, 92, 93) dans des azimuts différents (71, 72, 73), ladite émission simultanée étant autorisée quand l'espacement azimutal des faisceaux formés en émission assure un niveau découplé de brouillage au niveau des transpondeurs des avions entre les interrogations reçues par les lobes secondaires respectifs des faisceaux formés en émission ;
- assure la réception (62, 64) simultanée des réponses auxdits interrogateurs (91, 92, 93) dans des azimuts différents (71, 72, 73), ladite réception simultanée étant autorisée quand l'espacement azimutal des faisceaux formés en réception assure un niveau découplé de brouillage au niveau du radar entre les réponses attendues par les lobes secondaires respectifs des faisceaux formés en réception ;
- commande aux interrogateurs d'assurer entre eux la séparation temporelle des périodes soit d'émission soit de réception quand l'espacement des faisceaux en azimut est insuffisant pour garantir la détection.

2. Radar secondaire selon la revendication 1, **caractérisé en ce que** l'un des interrogateurs (91) dédiés à la fois à la surveillance SSR et au recueil de nouvelles cibles mode S, informe lesdits interrogateurs (92, 93), dédiés à la surveillance mode S et aux interrogations dirigées, de la détection d'une nouvelle cible, ladite nouvelle cible étant alors gérée par lesdits interrogateurs (92, 93), au moins un desdits interrogateurs commandant le pointage de son faisceau d'émission puis ultérieurement de son faisceau de réception dans la direction (71) de la dite cible dès lors que l'autorisation d'émission et de réception simultanée mentionnée précédemment est acquise.

3. Radar secondaire selon l'une quelconque des revendications précédentes, **caractérisé en ce qu'**un opérateur définit pour chaque cible le taux de rafraîchissement qu'il souhaite pour la surveillance/identification IFF quel que soit l'azimut de la cible détectée et de façon décorrélée de la veille.

4. Radar secondaire selon l'une quelconque des revendications précédentes, **caractérisé en ce qu'**un opérateur définit le fonctionnement en multi modes comme suit :
- en veille, le fonctionnement étant non sélectif de type
∘ Surveillance des avions des avions SSR
∘ Surveillance des avions militaires en IFF
∘ acquisition de nouveaux avions Mode S
- en surveillance, le fonctionnement étant sélectif/désigné de type
∘ interrogations/réponses sélectives de Surveillance Mode S
∘ interrogations/réponses sélectives de Data Link Mode S avec les mêmes avions qu'en Surveillance Mode S
∘ interrogation dirigées d'identification IFF (modes 4/5) sur requête externe pour un avion pré-détecté
l'opérateur définissant aussi :
- pour chaque cible, indépendamment, le taux de rafraîchissement qu'il souhaite pour la surveillance en Mode S/data link Mode S/identification IFF quel que soit l'azimut de la cible détectée et de façon décorrélée de la veille ;
- les priorités relatives aux modes sélectionnés en cas de conflit sur la ressource de focalisation du faisceau en azimut en émission ou en réception.

5. Radar secondaire selon l'une quelconque des revendications précédentes, **caractérisé en ce que**, pour accélérer la surveillance SSR et la surveillance IFF, ledit radar comporte au moins un autre interrogateur SSR / IFF de surveillance SSR ou IFF indépendant dudit premier interrogateur (91), ayant un faisceau associé pointant dans une autre direction que celle du faisceau associé audit premier interrogateur (91), opposée dans le cas d'utilisation d'un seul autre interrogateur SSR / IFF ou en quadrature dans le cas d'utilisation de trois autres interrogateurs SSR / IFF.

6. Radar secondaire selon l'une quelconque des revendications 1 à 4, **caractérisé en ce que**, quand le régime d'émission est de type actif, un dispositif superviseur est prévu pour autoriser des interrogations simultanées dans des azimuts suffisamment distincts, compte-tenu du faisceau formé, pour éviter le blocage des transpondeurs et **en ce que**, quand le régime d'émission est de type semi-actif, la ressource commune d'émission (94) peut être allouée en priorité à l'interrogateur SSR / IFF n° 1, puis aux autres interrogateurs.

7. Radar secondaire selon l'une quelconque des revendications 1 à 4, **caractérisé en ce que** ladite antenne (1) est cylindrique.

8. Radar secondaire selon l'une quelconque des revendications 1 à 4, **caractérisé en ce que** ladite antenne (1) est constituée par des panneaux à chacun desquels est associé au moins un interrogateur SSR / IFF.

9. Radar selon l'une quelconque des revendications précédentes, **caractérisé en ce que** ladite antenne est fixe.

10. Radar selon l'une quelconque des revendications 1 à 8, **caractérisé en ce que** ladite antenne est une antenne tournante.

## Patentansprüche

1. Sekundärradar, ausgerüstet mit einer Antenne mit elektronischer Abtastung (1) mit aktivem oder halbaktivem Sendebetrieb, mit Azimut-Raumabdeckung über 360°, **dadurch gekennzeichnet, dass** der Radar:
- mechanisch und funktional unabhängig vom Primärradar ist;
- die Grundsätze der Trennung anwendet
o auf Sendediagramme für jede Abfrage in jedem Modus;
o auf Empfangsdiagramme für jede Antwort in jedem Mode;
∘ der Zuweisung der ihm zugehörigen Aufgaben an separate Organe;
- ein oder mehrere SSR-/IFF-Abfragesysteme (91) aufweist, welche gleichzeitig der SSR- oder IFF-Überwachung und der Erhebung neuer Modus-S-Ziele gewidmet sind;
- ferner ein oder mehrere andere SSR-/IFF-Abfragesysteme zur selektiven Überwachung (92, 93) umfasst, welche der Modus-S-Überwachung und der gerichteten Identifikationsabfrage IFF widmet sind;
- die gleichzeitige Sendung (61, 63) der Abfragen der SSR-/IFF-Abfragesysteme (91, 92, 93) in unterschiedlichen Azimutwinkeln (71, 72, 73) sicherstellt, wobei die gleichzeitige Sendung erlaubt ist, wenn die Azimut-Beabstandung der in Sendung gebildeten Strahlen einen entkoppelten Störpegel an den Transpondern der Flugzeuge zwischen den durch die jeweiligen Sekundärkeulen empfangenen Abfragen der in Sendung gebildeten Strahlen sicherstellt;
- den gleichzeitigen Empfang (62, 64) der Antworten an die Abfragesysteme (91, 92, 93) in unterschiedlichen Azimutwinkeln (71, 72, 73) sicherstellt, wobei der gleichzeitige Empfang erlaubt ist, wenn die Azimut-Beabstandung der in Empfang gebildeten Strahlen einen entkoppelten Störpegel an den Transpondern der Flugzeuge zwischen den durch die jeweiligen Sekundärkeulen erwarteten Antworten der in Empfang gebildeten Strahlen sicherstellt;
- den Abfragesystemen befehlen, untereinander die zeitliche Trennung entweder der Sende- oder der Empfangsperioden sicherzustellen, wenn die Beabstandung der Strahlen in Bezug auf den Azimutwinkel unzureichend ist, um die Erkennung zu gewährleisten.

2. Sekundärradar nach Anspruch 1, **dadurch gekennzeichnet, dass** eines der Abfragesysteme (91), welche gleichzeitig der SSR-Überwachung und der Erhebung neuer Modus-S-Ziele gewidmet sind, die Abfragesysteme (92, 93), welche der Modus-S-Überwachung und der gerichteten Abfrage gewidmet sind, über die Erkennung eines neuen Ziels informiert, wobei das neue Ziel dann durch die Abfragesysteme (92, 93) verwaltet wird, wobei mindestens eines der Abfragesysteme die Peilung seines Sendestrahls und anschließend seines Empfangsstrahls in die Richtung (71) des Ziels ansteuert, sobald die vorgenannte gleichzeitige Sende- und Empfangserlaubnis erteilt ist.

3. Sekundärradar nach einem der vorhergehenden Ansprüche, **dadurch gekennzeichnet, dass** ein Bediener für jedes Ziel die Auffrischungsrate definiert, die er für die IFF-Überwachung/-Identifikation wünscht, unabhängig vom Azimutwinkel des erkannten Ziels und dekorreliert von der Wacht.

4. Sekundärradar nach einem der vorhergehenden Ansprüche, **dadurch gekennzeichnet, dass** ein Bediener den multimodigen Betrieb wie folgt definiert:
- wobei der Betrieb während der Wacht nicht selektiv ist, vom Typ
∘ Flugzeugüberwachung der SSR-Flugzeuge
∘ IFF-Überwachung der Militärflugzeuge
∘ Erfassung neuer Modus-S-Flugzeuge
- wobei der Betrieb während der Überwachung selektiv ist/als folgender Typ bezeichnet wird
∘ selektive Modus-S-Überwachungs-Abfragen/-Antworten
∘ selektive Data Link-S-Modus-Abfragen/-Antworten bei den gleichen Flugzeugen wie bei der Modus-S-Überwachung
∘ gerichtete IFF-Identifikation-Abfragen (Modi 4/5) auf externe Anforderung für ein zuvor erkanntes Flugzeug
wobei der Bediener ebenfalls Folgendes definiert:
- unabhängig für jedes Ziel, die Auffrischungsrate, die er für die Überwachung im Modus-S-/Data Link-S-Modus/IFF-Identifikationsmodus wünscht, unabhängig vom Azimutwinkel des erkannten Ziels und dekorreliert von der Wacht;
- die Prioritäten in den ausgewählten Modi bei Konflikt in Bezug auf die Ressource zur Fokalisierung des Strahls in Azimut beim Senden oder Empfangen.

5. Sekundärradar nach einem der vorhergehenden Ansprüche, **dadurch gekennzeichnet, dass** der Radar, zum Beschleunigen der SSR-Überwachung und der IFF-Überwachung, mindestens ein anderes, vom ersten Abfragesystem (91) unabhängiges SSR -/IFF-Abfragesystem zur SSR- oder IFF-Überwachung umfasst, welcher einen zugeordneten Strahl aufweist, welches in eine andere Richtung als diejenige des dem ersten Abfragesystem (91) zugeordneten Strahls peilt, in eine entgegengesetzte Richtung im Fall der Verwendung eines einzigen anderen SSR-/IFF-Abfragesystems oder in Quadratur im Fall der Verwendung von drei anderen SSR-/IFF-Abfragesystemen.

6. Sekundärradar nach einem der Ansprüche 1 bis 4, **dadurch gekennzeichnet, dass**, wenn es sich um einen aktiven Sendebetrieb handelt, eine Aufsichtseinrichtung vorgesehen ist, um gleichzeitige Abfragen in hinreichend unterschiedlichen Azimutwinkeln zu erlauben, angesichts des gebildeten Strahls, um die Blockierung der Transponder zu vermeiden und dadurch, wenn es sich um einen halbaktiven Sendebetrieb handelt, dass die gemeinsame Sende-Ressource (94) vorrangig dem SSR-/IFF-Abfragesystem Nr. 1, und anschließend den anderen Abfragesystemen zugewiesen werden kann.

7. Sekundärradar nach einem der Ansprüche 1 bis 4, **dadurch gekennzeichnet, dass** die Antenne (1) zylindrisch ist.

8. Sekundärradar nach einem der Ansprüche 1 bis 4, **dadurch gekennzeichnet, dass** die Antenne (1) aus Platten gebildet ist, welchen jeweils mindestens ein SSR-/IFF-Abfragesystem zugeordnet ist.

9. Radar nach einem der vorhergehenden Ansprüche, **dadurch gekennzeichnet, dass** die Antenne fest ist.

10. Radar nach einem der Ansprüche 1 bis 8, **dadurch gekennzeichnet, dass** die Antenne eine Drehantenne ist.

## Claims

1. A secondary radar equipped with an electronic-scanning antenna (1) with active or semi-active emission regime, covering space azimuthally over 360°, **characterized in that** said radar:
- is mechanically and functionally independent of the primary radar;
- applies the principles of separation
∘ of emission pattern for each interrogation of any mode;
∘ of reception pattern for each reply of any mode;
∘ of assignment of the tasks which are specific thereto to distinct units;
- has one or more SSR / IFF interrogators (91) dedicated at one and the same time to SSR or IFF surveillance and to gathering new mode S targets;
- further contains one or more other SSR / IFF interrogators for selective surveillance (92, 93) dedicated to mode S surveillance and to directed interrogations of IFF identification;
- ensures the simultaneous emission (61, 63) of the interrogations of said SSR / IFF interrogators (91, 92, 93) in different azimuths (71, 72, 73), said simultaneous emission being enabled when the azimuthal spacing of the beams formed in emission ensures a decoupled level of jamming at the level of the transponders of the aircraft between the interrogations received by the respective sidelobes of the beams formed in emission;
- ensures simultaneous reception (62, 64) of the replies to said interrogators (91, 92, 93) in different azimuths (71, 72, 73), said simultaneous reception being enabled when the azimuthal spacing of the beams formed in reception ensures a decoupled level of jamming at the level of the radar between the replies expected by the respective sidelobes of the beams formed in reception;
- instructs the interrogators to ensure amongst themselves the temporal separation of either the emission or reception periods when the spacing of the beams in azimuth is insufficient to guarantee detection.

2. The secondary radar according to claim 1, **characterized in that** one of the interrogators (91) dedicated at one and the same time to SSR surveillance and to the gathering of new mode S targets, informs said interrogators (92, 93), dedicated to mode S surveillance and to the directed interrogations, of the detection of a new target, said new target then being managed by said interrogators (92, 93), at least one of said interrogators controlling the pointing of its emission beam and then subsequently of its reception beam in the direction (71) of said target once the previously mentioned simultaneous enabling of emission and reception is acquired.

3. The secondary radar according to any one of the preceding claims, **characterized in that** an operator defines for each target the refresh rate that he desires for the IFF identification/surveillance whatever the azimuth of the detected target and in a decorrelated manner from monitoring.

4. The secondary radar according to any one of the preceding claims, **characterized in that** an operator defines multi-mode operation as follows:
- during monitoring, operation being non-selective, of type
∘ aircraft surveillance of SSR aircrafts
∘ IFF surveillance of military aircrafts
∘ acquisition of new Mode S aircrafts
- during surveillance, operation being selective/designated of type
∘ selective interrogations/replies of Mode S Surveillance
∘ selective interrogations/replies of Mode S Data Link with the same aircrafts as in Mode S Surveillance
∘ directed interrogations of IFF identification (modes 4/5) on external request for a pre-detected aircraft
the operator also defining:
- independently for each target the refresh rate that he desires for the surveillance in Mode S/Mode S data link/IFF identification whatever the azimuth of the detected target and in a decorrelated manner from monitoring;
- the priorities relating to the selected modes in case of conflict on the resource for focusing the beam in azimuth during emission or reception.

5. The secondary radar according to any one of the preceding claims, **characterized in that**, to speed up the SSR surveillance and the IFF surveillance, said radar comprises at least one other SSR / IFF interrogator for SSR or IFF surveillance independent of said first interrogator (91), having an associated beam pointing in a direction other than that of the beam associated with said first interrogator (91), opposite in the case of use of a single other SSR / IFF interrogator or in quadrature in the case of use of three other SSR / IFF interrogators.

6. The secondary radar according to any one of claims 1 to 4, **characterized in that**, when the emission regime is of active type, a supervisor device is provided to enable simultaneous interrogations in azimuths that are sufficiently distinct, having regard to the beam formed, to avoid the blocking of the transponders and **in that**, when the emission regime is of semi-active type, the common emission resource (94) can be allocated in priority to SSR / IFF interrogator No. 1, and then to the other interrogators.

7. The secondary radar according to any one of claims 1 to 4, **characterized in that** said antenna (1) is cylindrical.

8. The secondary radar according to any one of claims 1 to 4, **characterized in that** said antenna (1) consists of panels with each of which at least one SSR / IFF interrogator is associated.

9. The radar according to any one of the preceding claims, **characterized in that** said antenna is fixed.

10. The radar according to any one of claims 1 to 8, **characterized in that** said antenna is a rotating antenna.
